# FASCICULE DE BREVET EUROPEEN

(11) **EP 2 683 615 B1**
(45) Date de publication et mention de la délivrance du brevet: **10.06.2015**
(21) Numéro de dépôt: 12707621.4
(22) Date de dépôt: 09.03.2012
(51) Int. Cl.: B65D 5/50, B65D 85/50

(54) **DISPOSITIF DE PRÉSENTATION DE BOUQUETS DE FLEURS OU DE PLANTES EN POTS**
VORRICHTUNG ZUR ANZEIGE VON BLUMENSTRÄUSSEN ODER TOPFPFLANZEN
DEVICE FOR DISPLAYING FLOWER BOUQUETS OR POTTED PLANTS

(30) Priorité: 09.03.2011 LU 91796
(43) Date de publication de la demande: 15.01.2014
(73) Titulaire: Syrah Finance, 26600 Chanos Curson (FR)
(72) Inventeur: Charrin Philippe, Beaumont Monteux (FR)
(74) Mandataire: Dennemeyer & Associates S.A.
(86) Numéro de dépôt international: PCT/EP2012/054130
(87) Numéro de publication internationale: WO 2012/120121

(56) Documents cités:
- WO-A1-02/20372
- DE-B3- 10 303 192
- FR-A1- 2 589 436
- GB-A- 2 378 127

## Description

La présente invention concerne un dispositif de présentation de bouquets de fleurs et de plantes en pots selon la revendication 1.

EP 0828446 (Charrin) représente un dispositif de présentation de bouquets de fleurs comprenant un support conique rigide et une seule feuille étanche (résistante à l'eau).

FR 2870832 (Ricci) représente un vase à fleur comprenant une pièce centrale polygonale et au moins une branche articulée rigide détachable de cette pièce centrale.

DE 10303192 représente un vase pour fleurs comprenant une première feuille, une pièce centrale et une seconde feuille.

US 5781981 divulgue, aux figures 2A, 2B, 2C et 3B, un dispositif de présentation de pots de fleurs comprenant une première feuille, une ficelle et une seconde feuille, la ficelle ne comprend pas de branches.

GB 2378127 divulgue un dispositif de présentation de bouquets de fleurs comprenant une première feuille, une ficelle et une seconde feuille, la ficelle ne comprend pas de branches.

FR 2 589 436 divulgue un récipient constitué par un flanc en carton et par une seule feuille souple et étanche, le flanc présente une partie centrale formant rond et des volets rayonnant en étoile à 6 branches, dont les extrémités des branches ont chacune la même largeur. La présente invention se distingue de FR 2 589 436 du fait qu'une pièce centrale en forme d'étoile est insérée entre deux feuilles superposées.

WO 02/20372 divulgue un dispositif d'emballage portable d'un bouquet de fleurs.

La présente invention est destinée aux fleuristes capables de stabiliser des bouquets de fleurs sans autre aide que le simple fait de croiser les tiges du bouquet et d'emballer le tout dans une ou deux feuilles étanches (résistante à l'eau) et/ou d'employer un support à bouquets de fleurs du commerce et/ou d'emballer un pot.

La présente invention permet la personnalisation du bouquet de fleurs et de pots. La présente invention utilise un insert (2) en papier cartonné de faible grammage (de préférence non résistant à l'eau) et constitue la solution d'un emballage prêt à être employé :
- pour les fleuristes croisant les tiges pour stabiliser un bouquet de fleurs et n'utilisant pas de support et souhaitant réaliser des bouquets stables sans considérablement changer leur approche de montage d'un bouquet de fleurs.
- et/ou pour les fleuristes utilisant un support pour bouquet de fleurs
- et/ou pour les plantes en pots

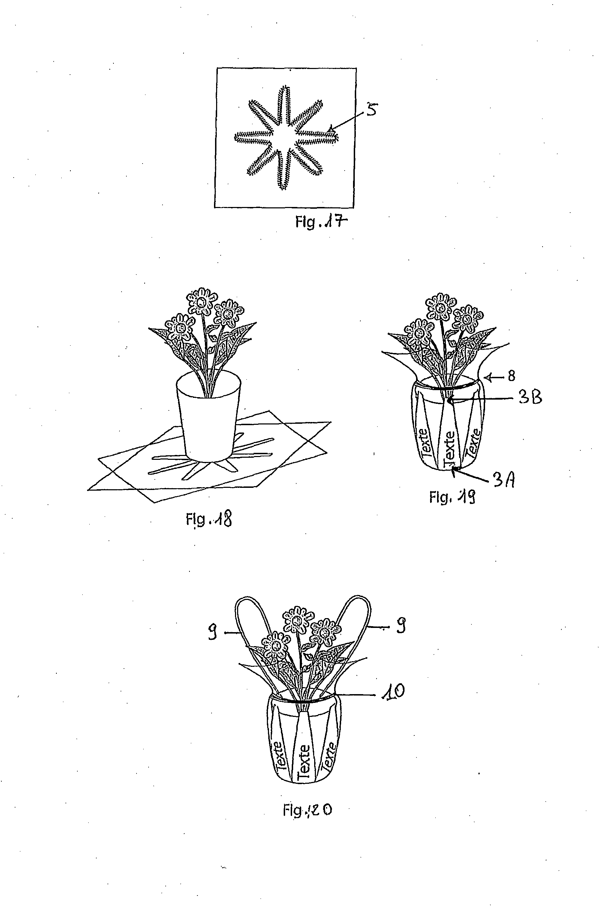

La présente invention facilite le marquage spécifique par représentation graphique de la pièce centrale (2) polygonale, soit directement sur la pièce centrale ou sur au-moins une branche (3) de la pièce centrale (2) polygonale. Ce dispositif a l'avantage de conférer une communication de qualité (numérique ou offset) à la clientèle des fleuristes par exemple au moyen d'une impression de codes barre lisibles en caisse par lecture horizontale centrée. La représentation graphique permet d'imprimer un texte ou un logo sur la pièce centrale polygonale et de multiplier les combinaisons de couleur à l'infini ce qui est impossible par impression directe sur une feuille étanche (résistante à l'eau). Un mode de réalisation de la présente invention est constitué de une ou deux feuilles étanches (1 et 4) (résistante à l'eau), d'une pièce centrale (2) polygonale ou circulaire (croisillon) en papier cartonné imprimé sur la face visible celui-ci afin d'être vu de l'extérieur par un être humain. La pièce centrale polygonale ou circulaire (2) (croisillon) est posée coté imprimé sur le dessus de la première feuille (1) transparente (3). Une seconde feuille (4) transparente est posée de manière alignée ou croisée par rapport à la première feuille transparente (ou de couleur). L'ensemble des deux feuilles est soudé par thermo-soudage (5) en périphérie de la pièce centrale polygonale (croisillon). La technique de soudage peut comprendre la technique thermique, à haute fréquence, à impulsion et à ultrasons. Le croisillon peut aussi être collé ou soudé (D) à la feuille étanche (résistante à l'eau) et utilisé à l'extérieur de la réserve d'eau ainsi réalisée ou du pot (fig.20). De préférence, le croisillon se trouve à l'extérieur de l'emballage, càd sur la face de la feuille n'étant pas en contact direct avec de l'eau ou avec un pot de fleur. L'effet technique lié au fait de souder ensemble les deux feuilles (entre lesquelles est glissé le croisillon) permet d'assurer une très bonne stabilité du bouquet malgré la faible épaisseur des feuilles.

Un intervalle d'épaisseur des feuilles est compris entre 0.1 mm et 1 mm et le type de matière utilisé est une feuille plastifiée. Un croisillon soudé à une ou deux feuilles permet une meilleure stabilisation et rigidification de la pièce centrale.

Les deux feuilles peuvent être soit transparentes soit teintées, soit l'une transparente et l'autre teintée.

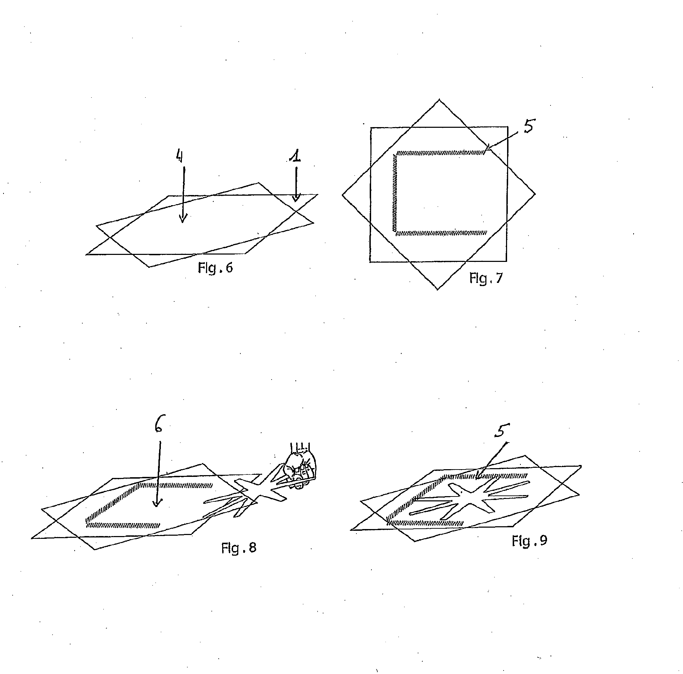

Les deux feuilles peuvent être soudées sur trois cotés (fig.7) de façon à créer un logement (6) pour insérer la pièce centrale polygonale. Le fleuriste pourra ainsi loger la pièce centrale polygonale dans ce logement. Il est à noter que le côté innovant de ces soudures est qu'elles sont toujours placées au dessus du niveau de l'eau, au niveau du lien, apportant ainsi une fiabilité accrue des soudures, et garantissant une étanchéité parfaite.

Le simple fait de souder entièrement en périphérie du croisillon permet par simple déchirement de séparer la feuille imprimée de la feuille en polypropylène et procure ainsi un avantage écologique. Le fait de pouvoir loger la pièce centrale polygonale (croisillon) dans un logement (6) permet aussi de pouvoir retirer cette pièce centrale polygonale (croisillon) lors d'un triage sélectif maitrisé (recyclage).

Les dispositifs de l'art antérieur ne permettent pas ou alors difficilement la séparation des divers composants, ces dispositifs sont souvent impropres au recyclage et jamais dans un but de communication.

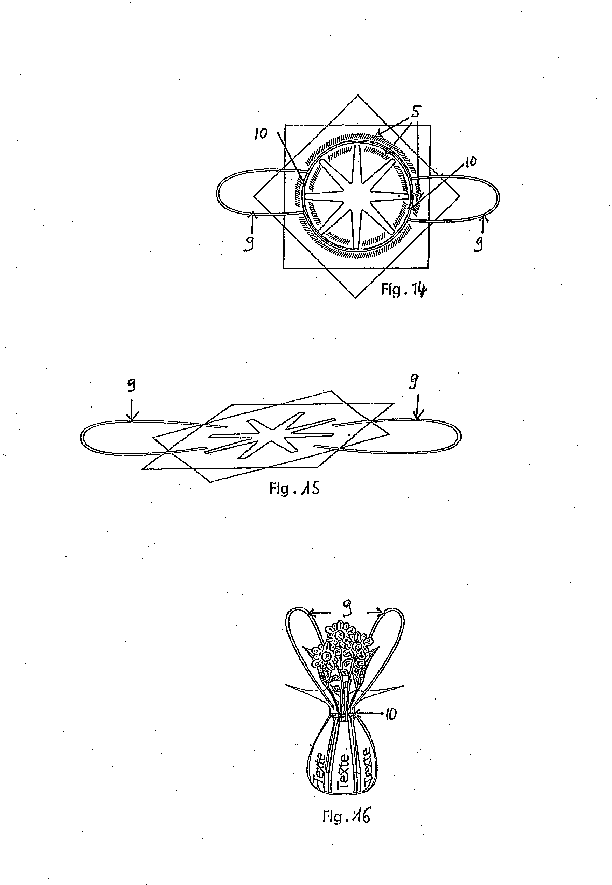

Le montage de ce nouveau dispositif de présentation de bouquet de fleurs se fait en plaçant en son centre le bouquet de fleurs et en remontant les feuilles le long des tiges du bouquet et/ou de la plante en pot, par exemple en enfonçant l'ensemble du dispositif dans un trou percé dans une table afin de permettre la mise en volume du dispositif. Ainsi, on obtient un nouveau dispositif de présentation de bouquet de fleurs (emballage) en attachant un lien (8) (par exemple un ruban) au sommet de ce dispositif (ce lien retenant les deux feuilles et les tiges des fleurs). Les branches de la pièce centrale polygonale font apparaître une représentation graphique (fig. 16) pouvant être vue des utilisateurs potentiels car parfaitement centré, visible et lisible sur 360°, ce que ne permet aucune impression directe sur une feuille communément employée avec ou sans un support interne qui se froisse et se plie de manière anarchique rendant sa lecture à cette endroit très difficile et aléatoire.

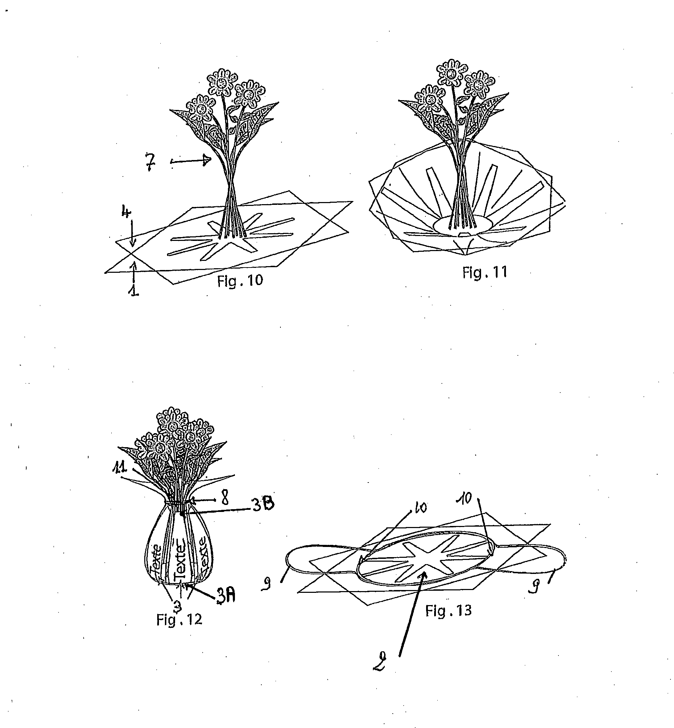

Le montage de ce nouveau dispositif de présentation de plante en pot se fait en plaçant en son centre le pot et en remontant les feuilles le long de la paroi du pot, par exemple en enfonçant l'ensemble du dispositif dans un trou percé dans une table afin de permettre la mise en volume du dispositif. Ainsi, on obtient un nouveau dispositif de présentation de plante en pot (emballage) en attachant un lien (8) au sommet de ce dispositif (ce lien retenant les deux feuilles et la plante en pot). Les branches de la pièce centrale polygonale font apparaître une représentation graphique (fig. 12 et fig.16) pouvant être vue des utilisateurs potentiels car parfaitement centré, visible et lisible sur 360°, ce que ne permet aucune impression directe sur une feuille communément employée avec ou sans un support interne qui se froisse et se plie de manière anarchique rendant sa lecture à cette endroit très difficile et aléatoire.

Dans un autre mode de réalisation, on peut aussi incorporer un fil de serrage (10) entre les deux feuilles soudées (fig. 14), qui par son passage entre les cordons de soudure (5) permet de fermer le sac par traction. Ceci permet de ne pas avoir à percer les feuilles étanches (résistante à l'eau) au niveau du lien (ou de l'étranglement) et permet donc d'éviter d'éventuelles fuites d'eau. Les anses de portage (9) dépassent largement de la partie supérieure du dispositif et ainsi ne permettent aucune fuite dans la partie basse du dispositif. Les anses de portage sont fixées dans la partie supérieure du dispositif.

Le dispositif de présentation de bouquets de fleurs ou de plantes en pot comprenant une première feuille, une pièce centrale de forme polygonale et une seconde feuille caractérisée en ce que cette pièce centrale est insérée entre cette première feuille et cette seconde feuille est défini à la revendication 1.

Dans un premier mode de réalisation, la pièce centrale peut être réalisée en une matière rigide ou non rigide. La première feuille et/ou la feuille unique, la pièce centrale et la seconde feuille sont plates avant mise en volume. La feuille unique et/ou la première feuille et la seconde feuille peuvent être translucides et étanches à l'eau. La feuille unique et/ou la première feuille et la seconde feuille peuvent être translucides ou non et non étanches à l'eau. La pièce centrale peut être étanche ou non à l'eau et résistante ou non à l'eau. La pièce centrale est susceptible d'être recouverte de représentation(s) graphique(s). La pièce centrale comprend au moins une branche solidaire de cette pièce centrale. Au moins une branche est susceptible d'être recouverte de représentation graphique. La totalité des branches sont solidaires de cette pièce centrale. La totalité des branches sont susceptibles d'être recouvertes de représentation graphique. La seconde feuille peut être partiellement thermo-soudée à la première feuille de sorte à offrir un logement à la pièce centrale rigide ou non rigide de forme polygonale. La pièce centrale peut aussi être soudée ou collée à une seule feuille et disposée à l'extérieur de la réserve d'eau. Lors de la mise en volume du dispositif, la première feuille et la seconde feuille sont relevées le long d'au-moins une branche de la pièce centrale polygonale et entourent les tiges de fleurs et/ou la plante en pot, l'ensemble étant maintenu en place par un lien. L'ensemble est agencé pour permettre le passage d'air et/ou d'eau par un orifice situé à la partie supérieure du dispositif. Au-moins une anse de portage peut être maintenue en place entre la première et la seconde feuille par thermo-soudure entre cette première et cette seconde feuille. La thermo soudure maintien en place l'anse de portage et la pièce centrale polygonale. Un fil de serrage (10) peut être fixé à au-moins une anse de portage (9) et est maintenu en place avec la pièce centrale (2) polygonale ou circulaire par thermo-soudure (5) entre les deux feuilles.

La présente invention concerne un dispositif de présentation de bouquets de fleurs ou de plantes en pots comprenant une première feuille (1), une pièce centrale (2) et une seconde feuille (4), ladite pièce centrale (2) étant insérée entre la première feuille (1) et la seconde feuille (4), ladite première feuille (1) étant superposée à ladite seconde feuille (4), ledit dispositif étant **caractérisé en ce que** la pièce centrale comprend un corps central (2A) et au-moins huit branches repliables (3) solidaires du corps central (2A), et en ce que lors de la mise en volume du dispositif l'angle formé entre le corps central (2A) et les au-moins huit branches repliables (3) est soit inférieur à 90° dans le cas d'un dispositif de présentation de bouquets de fleurs, soit égal à 90° ou supérieur à 90° dans le cas d'un dispositif de présentation de plantes en pots.

Le dispositif de la présente invention peut aussi être caractérisé en ce que lesdites au-moins huit branches repliables (3) sont de forme trapézoïdale et possèdent une extrémité inférieure (3A) et une extrémité supérieure (3B), l'extrémité inférieure (3A) étant solidaire du corps central (2A) et l'extrémité supérieure (3B) étant définie comme étant la partie des au-moins huit branches repliables (3) la plus éloignée du corps central (2A), et en ce que l'extrémité inférieure (3A) est plus large que l'extrémité supérieure (3B).

Le dispositif de la présente invention peut aussi être caractérisé en ce que la pièce centrale (2) comprend au moins 9, 10, 11, 12, 13, 14, 15, 20, 25, 30, 40, 50 ou plus encore de branches (3) repliables.

Dans un second mode de réalisation qui ne fait pas partie de l'invention, le dispositif de présentation de bouquets de fleurs ou de plantes en pots de la présente invention peut comprendre une seule feuille (1) et une pièce centrale (2), ladite pièce centrale (2) est soudée à la face extérieure de la feuille (1), càd la face de la feuille (1) n'étant pas en contact avec de l'eau ou avec un pot de fleur. L'intérêt de cette solution par rapport à l'art antérieur est notamment le fait de pouvoir utiliser un croisillon en carton non résistant à l'eau qui est moins onéreux qu'une pièce en plastique. Un croisillon soudé à une feuille permet une meilleure stabilisation et rigidification de la pièce centrale. Les caractéristiques du premier mode de réalisation s'appliquent aussi au second mode de réalisation.

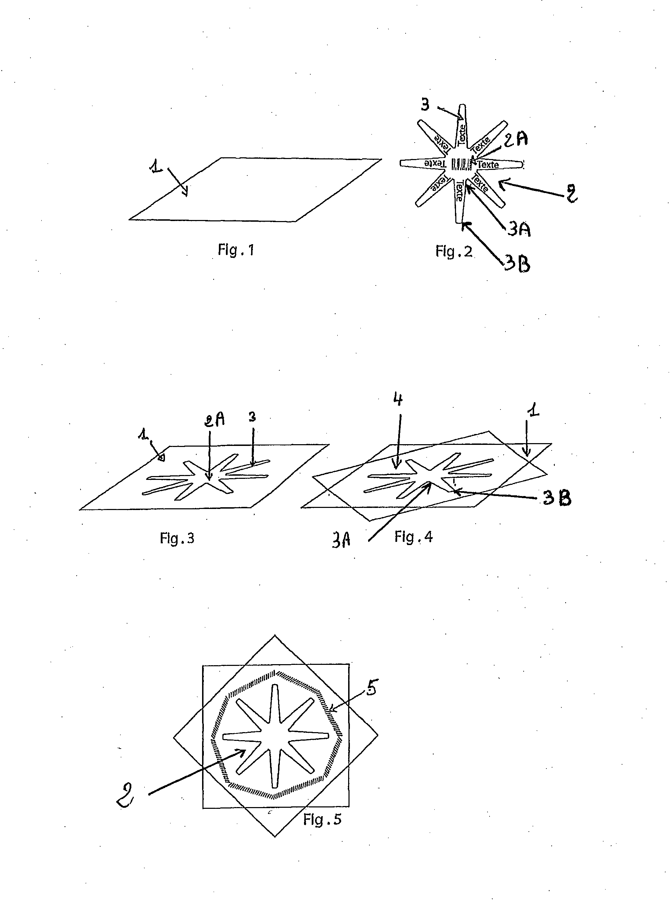

La figure 1 représente la première feuille (1) à plat.
La figure 2 représente la pièce centrale (2) polygonale à plat comprenant un corps central (2A) huit branches (3) solidaires de cette pièce centrale polygonale et lesdites branches (3) possèdent une extrémité inférieure (3A) et une extrémité supérieure (3B), l'extrémité inférieure (3A) étant solidaire du corps central (2A) et l'extrémité supérieure (3B) étant définie comme étant la partie des branches (3) la plus éloignée du corps central (2A), et l'extrémité inférieure (3A) est plus large que l'extrémité supérieure (3B).
La figure 3 représente la pièce centrale (2) polygonale posée sur le dessus de la première feuille (1).
La figure 4 représente la pièce centrale (2) polygonale insérée entre la première feuille (1) et la seconde feuille (4). La seconde feuille (4) à plat étant croisée ou décalée par rapport à la première feuille (1) à plat ou alignée.
La figure 5 représente la pièce centrale (2) polygonale insérée entre la première feuille (1) et la seconde feuille (4) et la seconde feuille est thermo-soudée (5) à la première feuille, la thermo-soudure (5) entourant la pièce centrale (2) polygonale.
La figure 6 représente la seconde feuille (4) qui est croisée ou décalée par rapport à la première feuille (1) (à plat on obtient une forme en étoile) ou alignée.
La figure 7 représente le dispositif de la figure 6 partiellement thermo-soudée (5) et créant un logement (6) pour recevoir la pièce centrale (2) polygonale.
La figure 8 montre comment la pièce centrale (2) polygonale est insérée entre la première feuille (1) et la seconde feuille (4) à l'intérieur du logement (6) partiellement thermo-soudé (5).
La figure 9 représente la pièce centrale (2) polygonale insérée à l'intérieur du logement (6) partiellement thermo-soudé (5).
La figure 10 représente un bouquet de fleur (7) posé sur la seconde feuille (4) et au centre de la pièce centrale (2) polygonale.
La figure 11 représente la mise en volume du dispositif de la présente invention qui emballe le bouquet de fleurs (7), càd le dispositif de la figure 10 qui est relevé pour envelopper les tiges du bouquet de fleurs (7) ou de la plante en pot.
La figure 12 représente le dispositif final mis en volume et attaché par un lien (8) à la partie supérieure du dispositif.
La figure 13 représente le dispositif de la présente invention montrant deux anses de portage (9) fixées aux deux feuilles (1 et 4) et un fil de serrage (10) passant entre les deux anses de portage (9) et étant maintenu en place par thermo-soudure (5) entre la première (1) et la seconde feuille (4) et entourant la pièce centrale (2) polygonale.
La figure 14 représente le dispositif de la figure 13 vue du dessus montrant le fil de serrage (10) maintenu par thermo-soudage (5) entre les deux feuilles (1 et 4) et entourant la pièce centrale (2) polygonale.
La figure 15 représente le dispositif de la figure 13 sans fil de serrage.
La figure 16 représente la mise en volume du dispositif des figures 14 et 15 avec anses de portage et avec un bouquet de fleurs et le fil de serrage (10) ou anses de portage (9) maintenant le dispositif en place autour des tiges du bouquet de fleurs.
La figure 17 représente la pièce centrale (2) uniquement collée ou soudée à sa périphérie sous la feuille (1) càd à l'extérieur de cette feuille (1).
La figure 18 reprend l'application autour d'une plante en pot.
La figure 19 reprend l'attache par liage au moyen d'un lien (8) autour de la plante en pot.
La figure 20 représente le dispositif de la figure 19 comportant en plus deux anses de portage et un fil de serrage.

## Revendications

1. Dispositif de présentation de bouquets de fleurs ou de plantes en pots comprenant une première feuille (1), une pièce centrale (2) et une seconde feuille (4), ladite pièce centrale (2) étant insérée entre la première feuille (1) et la seconde feuille (4), ladite première feuille (1) étant superposée à ladite seconde feuille (4),
ledit dispositif étant **caractérisé en ce que**
la pièce centrale comprend un corps central (2A) et au-moins huit branches repliables (3) solidaires du corps central (2A), et
**en ce que** lors de la mise en volume dudit dispositif l'angle formé entre le corps central (2A) et les au-moins huit branches repliables (3) est
inférieur à 90° dans le cas d'un dispositif de présentation de bouquets de fleurs,
et égal à 90° ou supérieur à 90° dans le cas d'un dispositif de présentation de plantes en pots.

2. Dispositif selon la revendication 1, **caractérisé en ce que** lesdites au-moins huit branches repliables (3) possèdent une extrémité inférieure (3A) et une extrémité supérieure (3B), l'extrémité inférieure (3A) étant solidaire du corps central (2A) et l'extrémité supérieure (3B) étant définie comme étant la partie des au-moins huit branches repliables (3) la plus éloignée du corps central (2A), et **en ce que** l'extrémité inférieure (3A) est plus large que l'extrémité supérieure (3B).

3. Dispositif selon la revendication 1, **caractérisé en ce que** les au-moins huit branches (3) sont de forme trapézoïdale.

4. Dispositif selon la revendication 1, **caractérisé en ce que** le corps central (2A) est de forme polygonale ou circulaire.

5. Dispositif selon la revendication 1, **caractérisé en ce que** la pièce centrale est réalisée en une matière non rigide et non résistante à l'eau.

6. Dispositif selon la revendication 1, **caractérisé en ce que** la première feuille (1) et la seconde feuille (4) sont des feuilles translucides ou non translucides et résistantes à l'eau.

7. Dispositif selon la revendication 1, **caractérisé en ce que** la première feuille (1) et la seconde feuille (4) sont des feuilles translucides ou non translucides et non résistantes à l'eau.

8. Dispositif selon la revendication 1, **caractérisé en ce que** les branches (3) sont susceptibles d'être recouvertes de représentation graphique.

9. Dispositif selon la revendication 1, **caractérisé en ce que** la seconde feuille (4) est partiellement soudée (5) à la première feuille (1) de sorte à offrir un logement (6) à la pièce centrale (2).

10. Dispositif selon la revendication 1, **caractérisé en ce que** la seconde feuille (4) est entièrement soudée (5) à la première feuille (1) tout le long de la périphérie de la pièce centrale (2).

11. Dispositif selon la revendication 1, **caractérisé en ce que** lors de la mise en volume du dispositif la première feuille (1) et la seconde feuille (4) sont relevées le long des au-moins huit branches (3) de la pièce centrale (2) et entourent les tiges de fleurs, l'ensemble étant maintenu en place par un lien (8).

12. Dispositif selon la revendication 1, **caractérisé en ce qu'**au-moins une anse de portage (9) est maintenue en place par fixation à la première feuille (1) et à la seconde feuille (4).

13. Dispositif selon la revendication 12, **caractérisé en ce qu'**un fil de serrage (10) est fixé à au-moins une anse de portage (9) et est maintenu en place avec la pièce centrale (2) polygonale par thermo-soudure (5).

## Patentansprüche

1. Vorrichtung für die Präsentation von Blumensträußen oder Topfpflanzen, die einen ersten Bogen (1), ein zentrales Teil (2) und einen zweiten Bogen (4) umfasst, wobei das zentrale Teil (2) zwischen dem ersten Bogen (1) und dem zweiten Bogen (4) eingefügt ist, wobei der erste Bogen (1) über dem zweiten Bogen (4) liegt,
wobei die Vorrichtung **dadurch gekennzeichnet ist, dass**
das zentrale Teil einen zentralen Körper (2A) und mindestens acht faltbare Schenkel (3) umfasst, die mit dem zentralen Körper (2A) fest verbunden sind, und
dass bei der Volumenbildung der Vorrichtung der zwischen dem zentralen Körper (2A) und den mindestens acht faltbaren Schenkel (3) gebildete Winkel ist
unter 90° im Fall einer Vorrichtung für die Präsentation von Blumensträußen
und gleich 90° oder über 90° im Fall einer Vorrichtung für die Präsentation von Topfpflanzen.

2. Vorrichtung nach Anspruch 1, **dadurch gekennzeichnet, dass** die mindestens acht faltbaren Schenkel (3) ein unteres Ende (3A) und ein oberes Ende (3B) besitzen, wobei das untere Ende (3A) mit dem zentralen Körper (2A) fest verbunden ist und das obere Ende (3B) als der am weitesten vom zentralen Körper (2A) entfernte Abschnitt der mindestens acht faltbaren Schenkel (3) definiert ist und dass das untere Ende (3A) breiter als das obere Ende (3B) ist.

3. Vorrichtung nach Anspruch 1, **dadurch gekennzeichnet, dass** die mindestens acht Schenkel (3) trapezförmig sind.

4. Vorrichtung nach Anspruch 1, **dadurch gekennzeichnet, dass** der zentrale Körper (2A) polygonal oder kreisrund ist.

5. Vorrichtung nach Anspruch 1, **dadurch gekennzeichnet, dass** das zentrale Teil aus einem nicht steifen und nicht wasserfesten Material hergestellt ist.

6. Vorrichtung nach Anspruch 1, **dadurch gekennzeichnet, dass** der erste Bogen (1) und der zweite Bogen (4) transparente oder nicht transparente und wasserfeste Bögen sind.

7. Vorrichtung nach Anspruch 1, **dadurch gekennzeichnet, dass** der erste Bogen (1) und der zweite Bogen (4) transparente oder nicht transparente und nicht wasserfeste Bögen sind.

8. Vorrichtung nach Anspruch 1, **dadurch gekennzeichnet, dass** die Schenkel (3) mit einer grafischen Darstellung bedeckbar sind.

9. Vorrichtung nach Anspruch 1, **dadurch gekennzeichnet, dass** der zweite Bogen (4) zum Teil mit dem ersten Bogen (1) derart verschweißt (5) ist, dass für das zentrale Teil (2) eine Aufnahme (6) bereitgestellt ist.

10. Vorrichtung nach Anspruch 1, **dadurch gekennzeichnet, dass** der zweite Bogen (4) mit dem ersten Bogen (1) entlang des Umfangs des zentralen Teils (2) vollständig verschweißt (5) ist.

11. Vorrichtung nach Anspruch 1, **dadurch gekennzeichnet, dass** bei der Volumenbildung der Vorrichtung der erste Bogen (1) und der zweite Bogen (4) entlang der mindestens acht Schenkel (3) des zentralen Teils (2) angehoben werden und die Blütenstiele umschließen, wobei die Gruppe durch eine Verbindung (8) am Platz gehalten wird.

12. Vorrichtung nach Anspruch 1, **dadurch gekennzeichnet, dass** mindestens ein Tragehenkel (9) durch Befestigung am ersten Bogen (1) und am zweiten Bogen (4) am Platz gehalten wird.

13. Vorrichtung nach Anspruch 12, **dadurch gekennzeichnet, dass** an mindestens einem Tragehenkel (9) ein Spannfaden (10) befestigt ist und mit dem polygonalen zentralen Teil (2) durch Thermoschweißen (5) am Platz gehalten wird.

## Claims

1. A device for displaying bouquets of flowers or potted plants comprising a first sheet (1), a central part (2) and a second sheet (4), said central part (2) being inserted between the first sheet (1) and the second sheet (4), said first sheet (1) being superimposed on said second sheet (4),
said device being **characterized in that**
the central part comprises a central body (2A) and at least eight folding branches (3) secured to the central body (2A), and
**in that** during the shaping of said device, the angle formed between the central body (2A) and the at least eight folding branches (3) is
smaller than 90° in the case of a flower bouquet display device,
and equal to 90° or greater than 90° in the case of a potted plant display device.

2. The device according to claim 1, **characterized in that** said at least eight folding branches (3) have a lower end (3A) and an upper end (3B), the lower end (3A) being secured to the central body (2A) and the upper end (3B) being defined as being the part of the at least eight folding branches (3) furthest from the central body (2A), and **in that** the lower end (3A) is wider than the upper end (3B).

3. The device according to claim 1, **characterized in that** the at least eight branches (3) are trapezoidal.

4. The device according to claim 1, **characterized in that** the central body (2A) is polygonal or circular.

5. The device according to claim 1, **characterized in that** the central part is made from a non-rigid and non-water-resistant material.

6. The device according to claim 1, **characterized in that** the first sheet (1) and the second sheet (4) are translucent or non-translucent and water-resistant sheets.

7. The device according to claim 1, **characterized in that** the first sheet (1) and the second sheet (4) are translucent or non-translucent and non-water-resistant sheets.

8. The device according to claim 1, **characterized in that** the branches (3) can be covered with a graphic representation.

9. The device according to claim 1, **characterized in that** the second sheet (4) is partially welded (5) to the first sheet (1) so as to offer a housing (6) for the central part (2).

10. The device according to claim 1, **characterized in that** the second sheet (4) is entirely welded (5) to the first sheet (1) along the entire periphery of the central part (2).

11. The device according to claim 1, **characterized in that** during the shaping of the device, the first sheet (1) and the second sheet (4) are raised along the at least eight branches (3) of the central part (2) and surround the flower stems, the assembly being held in place by a link (8).

12. The device according to claim 1, **characterized in that** a carrying loop (9) is kept in place by fastening to the first sheet (1) and the second sheet (4).

13. The device according to claim 12, **characterized in that** a tightening wire (10) is fastened to at least one carrying loop (9) and is kept in place with the polygonal central part (2) by heat welding (5).
